# EUROPÄISCHE PATENTSCHRIFT

(11) **EP 2 131 172 B1**
(45) Veröffentlichungstag und Bekanntmachung des Hinweises auf die Patenterteilung: **16.05.2012**
(21) Anmeldenummer: 08010132.2
(22) Anmeldetag: 03.06.2008
(51) Int. Cl.: G01M 3/28

(54) **Gasführungsvorrichtung mit Dichtigkeitsprüfung**
Gas guidance device with seal check
Dispositif de commande de gaz à l'aide d'un contrôle d'étanchéité

(43) Veröffentlichungstag der Anmeldung: 09.12.2009
(73) Patentinhaber: Truma Gerätetechnik GmbH & Co. KG, 85640 Putzbrunn (DE)
(72) Erfinder: Schiegl, Andreas, 82041 Oberhaching (DE); Frank, Reinhard, 80331 München (DE); Butschek, Sven, 80798 München (DE); Gartmeier, Andreas, 81667 München (DE)
(74) Vertreter: Müller - Hoffmann & Partner

(56) Entgegenhaltungen:
- WO-A-2005/073687
- CH-A5- 652 502
- DE-A1- 3 907 490
- DE-A1- 19 905 667

## Beschreibung

Die Erfindung betrifft eine Gasführungsvorrichtung zum Verbinden einer Gasvorratseinrichtung mit einer Gasverbrauchseinrichtung. Eine derartige Gasführungsvorrichtung kann z.B. bei einem Reformer-Brennstoffzellen-System zur Bordstromversorgung in Freizeitfahrzeugen. Nutzfahrzeugen und Booten eingesetzt werden.

Mobile Einheiten, wie z.B. Freizeitfahrzeuge, Nutzfahrzeuge, Boote und dergleichen verfügen in der Regel über eine Flüssiggasversorgung für die Gasverbrauchseinrichtungen wie z.B. Kochherde, Heizungen, Warmwasserbereitungsanlagen, Kühlschränke etc. Die Flüssiggasversorgung kann auch für Systeme zur Bordstromversorgung genutzt werden. Als solche sind Motor-Generator-Systeme oder auch Reformer-Brennstoffzellen-Systeme bekannt. Die Kraftstoffbevorratung ist entweder über in der mobilen Einheit installierte Tanks oder - weit gebräuchlicher - über handelsübliche 5- bzw. 11-kg-Flaschen möglich. Die Gasverbrauchseinrichtungen sind über eine Gasführungsvorrichtung, die insbesondere Rohrleitungen aufweist, mit dem Flüssiggasvorrat verbunden. Als Flüssiggas werden Propan, Butan bzw. Gemische davon verwendet. Die Flüssiggasversorgung erfolgt meist mit einem (Über-)Druckniveau von 30 mbar, seltener auch mit 50 mbar.

Gasführende Leitungssysteme für Fahrzeuge und Boote müssen gemäß der EN 624 auf ihre Dichtigkeit überprüft werden. Diese Prüfung ist von authorisiertem Fachpersonal bei der Erstinstallation von Flüssiggasanlagen und anschlieβend regelmäßig alle 2 Jahre sowie bei technischen Änderungen durchzuführen. Ausgenommen davon ist der Wechsel von Flüssiggasflaschen, der keine Änderung der Flüssiggasanlage im eigentlichen Sinn darstellt und daher auch von Laien durchgeführt werden darf. Als Flüssiggasanlage definiert das DVGW-Regelwerk G 607 sowohl Gasgeräte als auch die entsprechenden Rohr- und Schlauchleitungen, Druckregeleinrichtungen sowie Gasversorgungsanlagen (Flaschen, Tanks).

Flüssiggas wird aus Sicherheitsgründen mit Odorierungsmitteln versehen, die schwefelhaltig sein können. Bestimmte Gasverbrauchseinrichtungen, wie z.B. Reformer-Brennstoffzellen-Systeme, erfordern eine Versorgung mit schwefelfreiem Flüssiggas um einen ordnungsgemäßen Betrieb zu ermöglichen. Zu diesem Zweck kann in der Zuleitung vom Flüssiggasvorrat vor oder in der Gasverbrauchseinrichtung eine Entschwefelungseinheit integriert werden, die die Odorierungsmittel und sonstige Schwefelverbindungen entfernt. Als geeignete Entschwefelungsmaterialien sind katalytisch wirkende Metalloxidverbindungen, Aktivkohle oder sonstige Schwefel absorbierende Materialien bekannt.

Bei Reformer-Brennstoffzellen-Systemen wirken sich schwefelhaltige Gaskomponenten negativ auf Langzeitstabilität, Aktivität und Selektivität der Katalysatoren im Reformersystem und der Brennstoffzelle aus. Daher muss beim Einsatz eines derartigen Reformer-Brennstoffzellen-Systems in einer mobilen Einrichtung eine Entschwefelungseinheit vorgesehen werden. Diese ist je nach länderspezifischer Schwefelbeladung des Flüssiggases, Betriebsdauer und Größe gewissen Wechsel- und Serviceintervallen unterworfen. Der Austausch oder Service an einer solchen Entschwefelungseinheit stellt einen Eingriff in die Flüssiggasanlage dar, so dass nach erfolgtem Wechsel oder Service eine erneute Dichtigkeitsprüfung erforderlich ist, die von entsprechend qualifiziertem Fachpersonal durchgeführt werden muss.

In der WO 2005/073687 A1 wird ein Verfahren zur Dichtheitsprüfung einer Gasversorgungsstrecke beschrieben, welche eine Gasversorgungsleitung für einen Brenner aufweist. Das durch die Gasversorgungsleitung strömende Gas wird bei einer Abschaltung des Brenners durch ein in der Gasversorgungsleitung angeordnetes erstes Ventil automatisch gegenüber dem Brenner abgesperrt. In Reihe zu dem ersten Ventil ist ein weiteres Gasventil vorgesehen, das zur Dichtheitsprüfung abgeschaltet wird, wodurch das in der Gasversorgungsleitung befindliche Gas eingeschlossen wird. Das eingeschlossene Gas wird durch eine Druckmessung überwacht. Wird während der Prüfzeit kein Druckabfall festgestellt, so kann der Brenner beim nächsten Start in Betrieb genommen werden.

Eine ähnliche Anordnung ist in der DE 199 05 667 A1 beschrieben. Hier wird ein partieller Leitungsabschnitt mit Hilfe von zwei elektrisch betätigbaren Ventilen von den übrigen Leitungsabschnitten abgetrennt. Der zu überwachende Leitungsabschnitt wird anschließend über einen aufgeschalteten Bypass mit Prüfgas gespült und temporär zur Druckabfallmessung geschlossen.

Aus der DE 39 07 490 A1 ist eine Vorrichtung zur Lecküberwachung einer mit Fluid gefüllten Rohrleitung bekannt. Zur Ermittlung eines Lecks in der Rohrleitung schließt eine Steuerung bei geschlossener Rohrleitung ein Magnetventil für eine bestimmte Zeit, um dann nach Schließen des Magnetventils mittels eines Druckmessgerätes den in der Rohrleitung bestehenden Druck zu messen. Bei Feststellung einer Druckdifferenz bleibt das Magnetventil geschlossen und es wird eine Alarmleuchte aktiviert.

Der Erfindung liegt die Aufgabe zugrunde, eine Gasführungsvorrichtung für ein Gasversorgungs- und -verbrauchssystem anzugeben, die es dem Benutzer des Systems gestattet, bestimmte Leitungskomponenten, wie z.B. eine Entschwefelungseinheit auszutauschen oder zu warten, ohne dass eine Dichtigkeitsprüfung durch einen autorisierten Fachmann gemäß der einschlägigen Regelwerke notwendig ist.

Die Aufgabe wird durch eine Gasführungsvorrichtung nach Anspruch 1 und ein Verfahren zur Dichtigkeitsprüfung nach Anspruch 9 gelöst. Vorteilhafte Ausgestaltungen der Erfindung sind in den abhängigen Ansprüchen angegeben.

Eine Gasführungsvorrichtung zum Verbinden einer Gasvorratseinrichtung mit einer Gasverbrauchseinrichtung weist auf: eine zwischen der Gasvorratseinrichtung und der Gasverbrauchseinrichtung verlaufende Gasleitungseinrichtung, eine in der Gasleitungseinrichtung angeordnete austauschbare Leitungskomponente, eine stromauf von der Leitungskomponente in der Gasleitungseinrichtung angeordnete erste Ventileinrichtung, eine stromab von der Leitungskomponente in der Gasleitungseinrichtung angeordnete zweite Ventileinrichtung, einen zwischen der ersten Ventileinrichtung und der zweiten Ventileinrichtung vorgesehenen Prüfbereich, und eine zwischen der ersten Ventileinrichtung und der zweiten Ventileinrichtung angeordnete Druckmesseinrichtung zum Messen eines Drucks in dem Prüfbereich, sowie eine Steuerung zum Ansteuern der Ventileinrichtungen. Die Steuerung steuert die Ventileinrichtungen derart an, dass, im Fall einer Überdruckprüfung, in einer ersten Phase die erste Ventileinrichtung geöffnet und die zweite Ventileinrichtung geschlossen ist, während im Fall einer Unterdruckprüfung in der ersten Phase die erste Ventileinrichtung geschlossen und die zweite Ventileinrichtung geöffnet ist. In einer zweiten Phase sind beide Ventileinrichtungen geschlossen. Dabei ist in der zweiten Phase durch die Druckmesseinrichtung der Druck über einen vorbestimmten Zeitraum messbar, wobei der gemessene Druck durch eine Auswerteeinrichtung auswertbar ist, derart, dass eine Änderung des Drucks in dem vorbestimmten Zeitraum als Ist-Druckänderung ermittelt und mit einer vorbestimmten zulässigen Grenz-Druckänderung verglichen wird.

Somit kann in dem Prüfbereich ein gegenüber der Umgebung bzw. - wie später noch erläutert wird - gegenüber dem stromauf von der ersten Ventileinrichtung anliegenden Druck ein höherer Druck erzeugt werden, der durch Schließen der beiden Ventileinrichtungen eingeschlossen wird. Durch Überwachen des Drucks in dem Prüfbereich über den vorbestimmten Zeitraum kann erkannt werden, ob sich eine Druckänderung einstellt und insbesondere der Druck unzulässig stark abfällt. In diesem Fall wird die zulässige Grenz-Druckänderung überschritten.

Die vorbestimmte zulässige Grenz-Druckänderung kann z.B. in Anlehnung an einschlägige Regelwerke oder Prüfvorschriften wie z.B. die G 607 festgelegt werden.

Die Erkenntnis einer unzulässig großen Druckänderung während des vorbestimmten Zeitraums kann nachfolgend in geeigneter Weise genutzt werden, um z.B. den Bediener durch ein Warnsignal auf eine mögliche Störung hinzuweisen oder um ein Starten der Gasführungsvorrichtung bzw. des gesamten Gasversorgungs-und/oder -gasverbrauchssystems zu verhindern. Der Bediener wie auch der Fachmann kann in jedem Fall darauf hingewiesen werden, dass im Prüfbereich eine unzulässige Leckage vorliegt.

Da der Prüfbereich der Bereich ist, in dem die austauschbare Leitungskomponente, also z.B. eine Entschwefelungseinheit, angeordnet ist, kann auch ein laienhafter Bediener mit dem Austausch der Leitungskomponente betraut werden. Sollte dabei ein Fehler auftreten und die unzulässige Leckage festgestellt werden, können durch das System automatische Schutzmaßnahmen ergriffen werden.

Unter dem Begriff einer "austauschbaren" Leitungskomponente ist zu verstehen, dass die Leitungskomponente zerstörungsfrei, also ohne Trenn- oder Schneidverfahren aus der Gasleitung ausgebaut werden kann. Die Leitungskomponente ist somit demontierbar bzw. auswechselbar, ohne dass Schneid- oder Fügeverfahren zur Anwendung kommen müssen. Dementsprechend werden in der Regel zwischen der austauschbaren Leitungskomponente und den jeweiligen Verbindungsstellen an der Gasleitungseinrichtung Dichtungen bzw. Dichtflächen vorgesehen sein.

Die Vorrichtung und das später noch beschriebene Verfahren sind grundsätzlich für alle Arten von Gasverbrauchseinrichtungen geeignet. Denkbar ist z.B., die Vorrichtung und das Verfahren generell für jegliche kohlenwasserstoffhaltige, mit Schwefel verunreinigte Brennstoffe, wie z.B. Erdgas oder Diesel, oder für andere Anwendungsgebiete, wie z.B. dezentrale Stromversorgungsanlagen oder stationäre Reformer-Brennstoffzellen-Systeme für die Hausenergieversorgung, zu adaptieren. Anstelle der oben beschriebenen Entschwefelungseinheit kann jede Art von ein-und ausbaubarer Leitungskomponente genutzt werden. Deren Einbau kann anschließend auf Dichtigkeit geprüft werden. Hierzu gehören z.B. Filterelemente für die Entfernung von Ölpartikeln oder andere, den Betrieb des nachfolgenden Gasverbrauchers störende Stoffe in dem zugeführten Gas.

Die oben angegebene Überdruckprüfung wird als solche bezeichnet, um zum Ausdruck zu bringen, dass in diesem Fall im Prüfbereich ein Druck vorliegt, der gröβer als der Umgebungsdruck (Atmosphärendruck) ist. Darüber hinaus kann im Fall der Überdruckprüfung auch ein Druck im Prüfbereich erzeugt werden, der über dem Druck liegt, der in der Gasleitungseinrichtung stromauf von der ersten Ventileinrichtung anliegt.

Bei der Überdruckprüfung kann ein Druckabfall über den vorbestimmten Zeitraum festgestellt werden, wenn eine unerwünschte Leckage vorliegt.

Bei der Unterdruckprüfung ist es zweckmäßig, wenn im Prüfbereich ein Druck vorhanden ist, der unterhalb des Umgebungsdrucks liegt. In diesem Fall kann bei einer Leckage ein Druckanstieg in der zweiten Phase festgestellt werden.

Durch die Auswerteeinrichtung kann ein Störungssignal erzeugbar sein, wenn die Ist-Druckänderung größer als die Grenz-Druckänderung ist. In diesem Fall wird durch die Auswerteeinrichtung eine Störung festgestellt, über die der Bediener mit Hilfe des Störungssignals informiert werden kann. Ebenso kann das Störungssignal steuerungs- und regelungstechnische Konsequenzen einleiten, wie z.B. das Starten der Gasverbrauchseinrichtung verhindern.

Zwischen der ersten Ventileinrichtung und der zweiten Ventileinrichtung kann eine Druckänderungseinrichtung vorgesehen sein, zum Ändern des Gasdrucks in der Gasleitungseinrichtung. Die Druckänderungseinrichtung kann durch die Steuerung in der ersten Phase aktiviert und in der zweiten Phase deaktiviert werden. Mit Hilfe der Druckänderungseinrichtung ist es möglich, den Druck in dem Prüfbereich zu erhöhen oder zu vermindern, um die Über- oder Unterdruckprüfung durchzuführen.

Prinzipiell kann die Gasführungsvorrichtung derart konzipiert sein, dass die Über-oder Unterdruckprüfung wahlweise durchgeführt wird. Ebenso ist es aber auch möglich, dass prinzipiell nur entweder die Über- oder die Unterdruckprüfung vollzogen wird. Dies liegt im Ermessen des Herstellers.

Für die Überdruckprüfung kann die Druckänderungseinrichtung zwischen der ersten Ventileinrichtung und der austauschbaren Leitungskomponente bzw. dem dafür vorgesehenen Montagebereich angeordnet sein. Die Druckänderungseinrichtung kann dann in der ersten Phase zwischen der ersten Ventileinrichtung und der zweiten Ventileinrichtung eine Erhöhung des Drucks in dem Prüfbereich relativ zu dem stromauf von der ersten Ventileinrichtung anliegenden, von der Gasvorratseinrichtung oder einem nachfolgend angeordneten Druckminderer stammenden Druck bewirken. Damit kann der gewünschte Überdruck erreicht werden, der in der zweiten Phase, wenn beide Ventileinrichtungen geschlossen sind, aufrechterhalten werden soll.

Als Druckänderungseinrichtung eignet sich insbesondere eine Gaspumpe.

Für die Unterdruckprüfung kann die Druckänderungseinrichtung zwischen der austauschbaren Leitungskomponente und der zweiten Ventileinrichtung angeordnet sein. Dann kann die Druckänderungseinrichtung in der ersten Phase zwischen der ersten Ventileinrichtung und der zweiten Ventileinrichtung eine Verminderung des im Prüfbereich anliegenden Drucks unterhalb des Umgebungsdrucks bewirken. Die Druckänderungseinrichtung, z.B. die Gaspumpe, saugt Gas aus dem Prüfbereich ab und erzeugt somit den Unterdruck. Da der Unterdruck unterhalb von dem Umgebungsdruck liegt, kann im Fall einer unerwünschten Leckage ein Druckanstieg in der zweiten Phase festgestellt werden.

Es kann ein mit der Steuerung gekoppelter Detektor vorgesehen sein, um das Vorhandensein oder Austauschen der austauschbaren Leitungskomponente zu überwachen. Als Detektor eignet sich z.B. ein Kontaktschalter, der einen Wechsel der austauschbaren Leitungskomponente, z.B. der Entschwefelungseinheit oder eines Filters detektiert.

Der Detektor, wie auch die Ventileinrichtungen, die Druckänderungseinrichtung und die Druckmesseinrichtung können über Signal- bzw. Regelleitungen mit der Steuerung verbunden sein.

Als Ventileinrichtungen eignen sich insbesondere Magnetventile, wie z.B. Absperr-und/oder Regelventile (Proportionalventile), die durch die Steuerung angesteuert werden können. Die Druckmesseinrichtung kann z.B. durch einen üblichen Drucksensor gebildet werden.

Die Gasvorratseinrichtung kann eine Flüssiggas-Vorratseinrichtung sein, bei der in einem Tank oder in auswechselbaren Gasflaschen Flüssiggas gelagert wird.

Die Gasverbrauchseinrichtung kann ein Reformer-Brennstoffzellen-System sein. Derartige Systeme sind insbesondere zur Bordstromversorgung in mobilen Einheiten einsetzbar.

Die Gasverbrauchseinrichtung, die erste Ventileinrichtung, die zweite Ventileinrichtung und die austauschbare Leitungskomponente können eine Einheit in Form eines Gasverbrauchersystems bilden. Diese Einheit kann in kompakter Form, z.B. in einem gemeinsamen Gehäuse ausgebildet sein. In diesem Fall kann die kompakte Einheit als Ganzes an die Gasvorratseinrichtung bzw. einen nachgeschalteten Druckminderer angeschlossen werden.

Bestandteil der Einheit bzw. des Gasverbrauchersystems kann auch die Druckänderungseinrichtung sein.

Somit kann auch die gesamte Gasführungsvorrichtung in einer mobilen Einheit, wie z.B. einem Freizeitfahrzeug, einem Nutzfahrzeug oder in Booten eingebaut sein. Unterhalb von einem Montagebereich der austauschbaren Leitungskomponente kann eine Führungseinrichtung vorgesehen sein, zum Führen von an dem Montagebereich der Leitungskomponente austretendem Gas in die Umgebung außerhalb der mobilen Einheit. Das austretende Gas, insbesondere Flüssiggas, weist ein höheres spezifisches Gewicht als Luft auf, so dass es im Falle einer Leckage nach unten entweicht. Die Führungseinrichtung gewährleistet, dass das im Montagebereich der Leitungskomponente, also insbesondere an den Dichtungs- bzw. Trennfugen, an denen die Leitungskomponente in die vorhandene Gasleitungseinrichtung eingesetzt wird, aufgefangen und in die Umgebung geleitet werden kann.

An den Verbindungsstellen zwischen der demontierbaren Leitungskomponente und den zu- und abführenden Gasleitungen kann bei Leckagen unerwünscht Flüssiggas austreten, das auf diese Weise gezielt aus der Gasverbrauchseinrichtung bzw. Gasführungsvorrichtung geleitet werden kann, um eine gefährliche Gasansammlung zu vermeiden. Mit Hilfe der Führungseinrichtung kann die austauschbare Leitungskomponente inklusive der Verbindungsstellen zu den Gasleitungen in die Luftzuführung der Gasverbrauchseinrichtung integriert werden. Dabei kann die Luftzuführung der Gasverbrauchseinrichtung als Unterbodenansaugung ausgebildet sein, so dass die für die Gasverbrauchseinrichtung erforderliche Luft an der Unterseite der mobilen Einheit angesaugt wird. Auf diese Weise kann sichergestellt werden, dass austretendes Gas ungehindert nach unten durch die Unterbodenansaugung abfließen kann. Dies ist auch dann möglich, wenn die Gasverbrauchseinrichtung nicht in Betrieb ist.

Die Gasverbrauchseinrichtung, die Ventileinrichtungen, die austauschbare Leitungskomponente, die Druckänderungseinrichtung und die Steuerung können zusammen in Form einer Einheit als Gasverbrauchersystem ausgebildet sein. So können die Komponenten z.B. alle in ein Reformer-Brennstoffzellensystem integriert werden, das als Einheit an den Flüssiggasvorrat angeschlossen werden kann.

Weiterhin wird ein Verfahren zur Dichtigkeitsprüfung in einer Gasführungsvorrichtung angegeben, mit den Prüfschritten:
- Im Fall einer Überdruckprüfung in einer ersten Phase Öffnen der ersten Ventileinrichtung und Schließen der zweiten Ventileinrichtung oder im Fall einer Unterdruckprüfung in der ersten Phase Schließen der ersten Ventileinrichtung und Öffnen der zweiten Ventileinrichtung:
- in einer zweiten Phase Schließen von beiden Ventileinrichtungen und Messen des Drucks in dem Prüfbereich über einen vorbestimmten Zeitraum; und
- Auswerten des gemessenen Drucks, derart, dass eine Änderung des Drucks in dem vorbestimmten Zeitraum als Ist-Druckänderung ermittelt und mit einer vorbestimmten zulässigen Grenz-Druckänderung verglichen wird.

Demnach kann in dem Prüfbereich im Verhältnis zum Umgebungsdruck ein Über-oder Unterdruck erzeugt werden. Der Prüfbereich wird in der zweiten Phase durch Schließen der Ventileinrichtungen abgeschottet, so dass nachfolgend die Druckänderung in dem Prüfbereich über den vorbestimmten Zeitraum überwacht werden kann.

Wenn festgestellt wird, dass die Ist-Druckänderung größer als die zulässige Grenz-Druckänderung ist, kann ein Störungssignal erzeugt werden. Das Störungssignal kann in vielfältiger Weise ausgewertet werden.

Insbesondere ist es möglich, bei Vorliegen eines Störungssignals die Prüfschritte zu wiederholen, d.h. erneut die erste und die zweite Phase in geeigneter Weise zu durchlaufen. Bei erneutem Vorliegen des Störungssignals kann dann z.B. ein Alarmsignal erzeugt werden. Wenn dann nämlich das System festgestellt hat, dass auch bei einem Wiederholen der Prüfschritte eine unzulässige Druckänderung vorliegt, wird das Ergebnis des ersten Prüfvorgangs bestätigt. Das System kann beim Vorliegen des Alarmsignals davon ausgehen, dass ein sicherheitsgefährdender Fehler vorliegt und ein Systemstart der Gasverbrauchseinrichtung unterbunden werden muss.

Nach Vorliegen eines Störungssignals kann der Bediener auch über die Störung informiert werden, verbunden mit der Aufforderung, den Sitz der austauschbaren Leitungskomponente zu überprüfen und die Dichtigkeitsprüfung erneut durchzuführen.

Die Dichtigkeitsprüfung kann durch das System insbesondere dann durchgeführt werden, wenn wenigstens eines der folgenden Kriterien erfüllt ist:
- Ablauf eines vorgegebenen Zeitintervalls;
- Ablauf einer vorgegebenen Anzahl von Betriebsstunden;
- Neustart des Gesamtsystems;
- Start der Gasverbrauchseinrichtung:
- Wechsel der austauschbaren Leitungskomponente.

Diese Kriterien können einzeln oder auch miteinander kombiniert erfüllt sein, um die interne Dichtigkeitsprüfung zu veranlassen. Vorteilhaft kann es z.B. sein, die Dichtigkeitsprüfung in der Startphase durchzuführen. Falls die Dichtigkeitsprüfung bei jedem Systemstart durchgeführt wird, kann z.B. auf den oben genannten Detektor verzichtet werden, der das Vorhandensein oder Austauschen der austauschbaren Leitungskomponente überwacht.

Wenn in dem vorgegebenen Zeitabschnitt kein Abfall des Prüfüberdrucks bzw. Anstieg des Prüfunterdrucks in dem Prüfbereich festgestellt wird, ist die Dichtigkeit gegeben und die Startprozedur der Gasverbrauchseinrichtung kann fortgesetzt werden.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: eine schematische Darstellung mit dem Aufbau einer Gas- führungsvorrichtung;
- **Fig. 2**: ein Ablaufdiagramm zur Darstellung des Dichtigkeitsprü- fungs-Verfahrens.

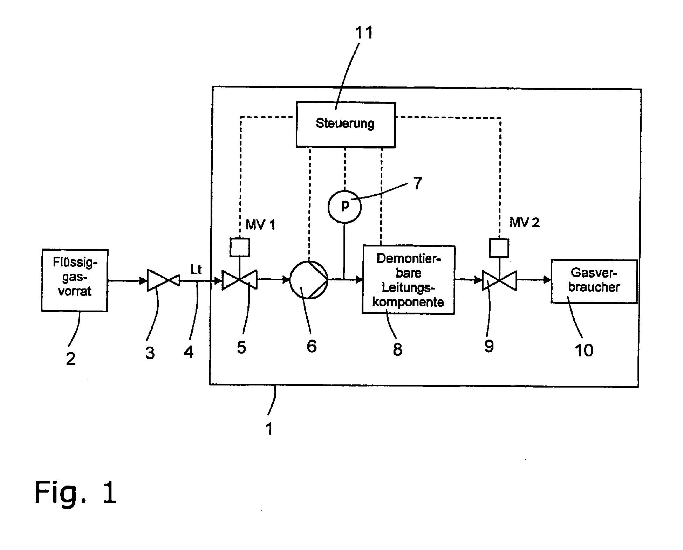

Fig. 1 zeigt ein Gasverbrauchersystem 1, das an einem als Gasvorratseinrichtung dienenden Flüssiggasvorrat 2 angeschlossen ist. Zwischen dem Flüssiggasvorrat 2 und dem Gasverbrauchersystem 1 ist eine Druckreduziervorrichtung 3 angeordnet. Das Flüssiggas wird über eine einen Teil einer Gasleitungseinrichtung bildende Leitung 4 zu dem Gasverbrauchersystem 1 geführt. Das Gasverbrauchersystem 1 weist - in Strömungsrichtung gesehen - folgende Komponenten auf: ein als erste Ventileinrichtung dienendes erstes Magnetventil 5, eine als Druckänderungseinrichtung dienende Gaspumpe 6, einen Drucksensor 7, eine austauschbare Leitungskomponente 8, ein als zweite Ventileinrichtung dienendes zweites Magnetventil 9 und schließlich einen als eigentliche Gasverbrauchseinrichtung dienenden Gasverbraucher 10.

Der Gasverbraucher 10 kann z.B. das eigentliche Reformer-Brennstoffzellen-System sein, dem stromauf eine als austauschbare Leitungskomponente 8 dienende Entschwefelungseinheit vorgeschaltet ist.

Das erste Magnetventil 5, die Gaspumpe 6 und das zweite Magnetventil 9 können durch eine Steuerung 11 angesteuert werden. Die Steuerung 11 enthält von dem Drucksensor 7 Informationen über den im Leitungsbereich bei der Leitungskomponente 8 herrschenden Druck. Zudem kann die Steuerung 11 auch mit der Leitungskomponente 8 bzw. einem dort vorgesehenen, nicht gezeigten Detektor gekoppelt sein, um das Vorhandensein oder das Auswechseln der Leitungskomponente zu erkennen. Der Detektor kann z.B. in Form eines Kontaktschalters ausgebildet sein.

Das Gas wird aus dem Flüssiggasvorrat 2 entnommen und über die Druckreduziervorrichtung 3 auf den in Freizeitfahrzeugen, Nutzfahrzeugen und Booten standardisierten Betriebsdruck von z.B. 30 mbar abgesenkt. Über die Leitung 4 wird das Flüssiggas zu dem Gasverbrauchersystem 1 geführt. Das erste Magnetventil 5 dient als Absperrventil gegen die Gaszuführungsleitung 4 und ist während des Betriebs des Gasverbrauchersystems 1 geöffnet.

Die sich daran anschließende Gaspumpe 6 erhöht den Druck auf einen Wert oberhalb des Standardbetriebsdrucks von 30 mbar. Der Überdruck wird durch den Drucksensor 7 detektiert. Das Gas strömt nachfolgend durch die austauschbare Leitungskomponente 8 bei der z.B. Odorierungsmittel und sonstige schwefelhaltige Bestandteile des Flüssiggases zurückgehalten werden. Anschließend gelangt das Gas über das zweite Magnetventil 9, das als Absperr- und/oder Regelventil (z.B. Proportionalventil) ausgebildet sein kann, in den Gasverbraucher 10. Letzterer kann Brenner (katalytisch, konventionell), Reformierreaktoren, Reaktionsräume von Brennstoffzellen oder Brennkammern von Motoren aufweisen.

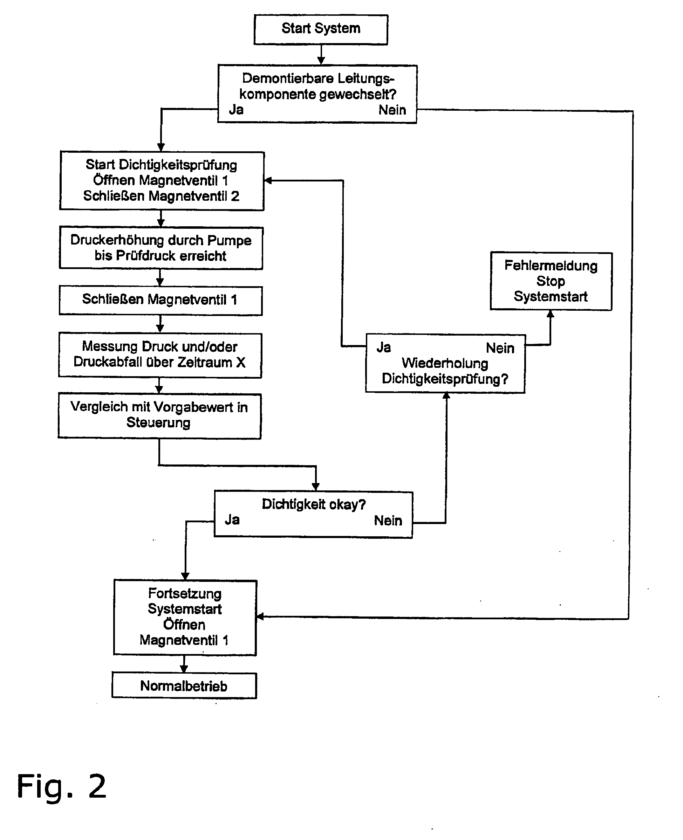

Fig. 2 zeigt den prinzipiellen Ablauf der internen Dichtigkeitsprüfung.

Nach dem Start des Systems überprüft die Steuerung 11 anhand des Signals des in den Figuren nicht gezeigten Kontaktschalters (Detektors), ob ein Wechsel der Leitungskomponente 8 stattgefunden hat. Ist dies der Fall, startet die Steuerung die Dichtigkeitsprüfung. Hierzu wird in einer ersten Phase das erste Magnetventil 5 geöffnet und das zweite Magnetventil 9 geschlossen. Flüssiggas strömt über die Druckreduziervorrichtung 3 und das erste Magnetventil 5 in Richtung Gaspumpe 6, die den Druck in den nachfolgenden Leitungen und der austauschbaren Leitungskomponente 8 solange erhöht, bis ein vorgegebener Prüfdruck erreicht ist. Dieser Prüfdruck bzw. Prüfüberdruck liegt mindestens auf dem Niveau des Standardbetriebsdrucks von 30 mbar. Er kann aber auch höher, z.B. in einem Bereich von 50 bis 500 mbar liegen.

Anschließend wird in einer zweiten Phase das erste Magnetventil 5 geschlossen und der Prüfüberdruck über einen vorbestimmten Zeitraum (Prüfungszeitraum) durch den Drucksensor 7 gemessen. Diese Prozesse werden durch die Steuerung 11 initiiert, überwacht und ausgewertet.

Der Prüfzeitraum kann z.B. zwischen 10 Sekunden und 10 Minuten liegen. Durch einen Vergleich von Prüfüberdruck und einem als zulässige Grenz-Druckänderung dienenden Druckvorgabewert in der Steuerung 11 wird auf die Dichtigkeit der zwischen den beiden Magnetventilen 5. 9 angeordneten Leitungskomponente 8 und ihren Verbindungsstellen zu den Gasleitungen geschlossen. Diese Verbindungsstellen können von beliebiger Ausführung sein und z.B. durch Schraubverbindungen, Schnellkupplungen etc. gebildet werden.
Wenn in dem vorgegebenen Zeitabschnitt kein Abfall des Prüfüberdrucks festgestellt wird, ist die Dichtigkeit gegeben, so dass die Startprozedur fortgesetzt werden kann.

Liegt hingegen ein Abfall des Prüfüberdrucks vor, ist von einer Undichtigkeit bzw. einem fehlerhaften Wechsel der demontierbaren Leitungskomponente 8 auszugehen. Die Steuerung 11 kann in diesem Fall entweder die Dichtigkeitsprüfung selbständig wiederholen oder den Bediener des Gasverbrauchersystems 1 auffordern, das System zu überprüfen oder einen erneuten Einbau der Leitungskomponente 8 durchzuführen.

## Patentansprüche

1. Gasführungsvorrichtung zum Verbinden einer Gasvorratseinrichtung (2) mit einer Gasverbrauchseinrichtung (10), mit
- einer zwischen der Gasvorratseinrichtung (2) und der Gasverbrauchseinrichtung (10) verlaufenden Gasleitungseinrichtung;
- einer in der Gasleitungseinrichtung angeordneten Leitungskomponente (8);
- einer stromauf von der Leitungskomponente (8) in der Gasleitungseinrichtung angeordneten ersten Ventileinrichtung (5);
- einer stromab von der Leitungskomponente (8) in der Gasleitungseinrichtung angeordneten zweiten Ventileinrichtung (9);
- einem zwischen der ersten Ventileinrichtung (5) und der zweiten Ventileinrichtung (9) vorgesehenen Prüfbereich;
- einer zwischen der ersten Ventileinrichtung (5) und der zweiten Ventileinrichtung (9) angeordneten Druckmesseinrichtung (7) zum Messen eines Drucks In dem Prüfbereich; und mit
- einer Steuerung (11) zum Ansteuern der Ventileinrichtungen (5, 9) derart, dass
+ im Fall einer Überdruckprüfung in einer ersten Phase die erste Ventileinrichtung (5) geöffnet und die zweite Ventileinrichtung (9) geschlossen ist;
+ in einer zweiten Phase beide Ventileinrichtungen (5, 9) geschlossen sind;
wobei
- in der zweiten Phase durch die Druckmesseinrichtung (7) der Druck über einen vorbestimmten Zeitraum messbar ist;
- der gemessene Druck durch eine Auswerteeinrichtung auswertbar ist, derart, dass eine Änderung des Drucks in dem vorbestimmten Zeitraum als Ist-Druckänderung ermittelt und mit einer vorbestimmten zulässigen Grenz-Druckänderung verglichen wird;
**dadurch gekennzeichnet, dass**
- die in der Gasleitungseinrichtung angeordnete Leitungskomponente (8) austauschbar ist,
- im Fall einer Unterdruckprüfung in der ersten Phase die erste Ventileinrichtung (5) geschlossen und die zweite Ventileinrichtung (9) geöffnet ist;
- zwischen der ersten Ventileinrichtung (5) und der zweiten Ventileinrichtung (9) eine Druckänderungseinrichtung (6) vorgesehen ist, zum Ändern des Gasdrucks in der Gasleitungseinrichtung; und wobei
- die Druckänderungseinrichtung (6) durch die Steuerung (11) in der ersten Phase aktiviert wird und in der zweiten Phase deaktiviert wird.

2. Gasführungsvorrichtung nach Anspruch 1, **dadurch gekennzeichnet, dass** durch die Auswerteeinrichtung ein Störungssignal erzeugbar ist, wenn die Ist-Druckänderung größer als die Grenz-Druckänderung ist.

3. Gasführungsvorrichtung nach einem der Ansprüche 1 oder 2, **dadurch gekennzeichnet, dass** für die Überdruckprüfung die Druckänderungseinrichtung (6) zwischen der ersten Ventileinrichtung (5) und der austauschbaren Leitungskomponente (8) angeordnet und derart ausgebildet ist, um in der ersten Phase zwischen der ersten Ventileinrichtung (5) und der zweiten Ventileinrichtung (9) eine Erhöhung des Drucks in dem Prüfbereich relativ zu dem stromauf von der ersten Ventileinrichtung (5) anliegenden Druck zu bewirken.

4. Gasführungsvorrichtung nach einem der Ansprüche 1 oder 2, **dadurch gekennzeichnet, dass** für die Unterdruckprüfung die Druckänderungseinrichtung (6) zwischen der austauschbaren Leitungskomponente (8) und der zweiten Ventileinrichtung (9) angeordnet und derart ausgebildet ist, um in der ersten Phase zwischen der ersten Ventileinrichtung (5) und der zweiten Ventileinrichtung (9) eine Verminderung des im Prüfbereich anliegenden Drucks unterhalb des Umgebungsdrucks zu bewirken.

5. Gasführungsvorrichtung nach einem der Ansprüche 1 bis 4, **dadurch gekennzeichnet, dass** ein mit der Steuerung (11) gekoppelter Detektor vorgesehen ist zum Überwachen des Vorhandenseins oder Austauschens der austauschbaren Leitungskomponente (8).

6. Gasführungsvorrichtung nach einem der Ansprüche 1 bis 5, **dadurch gekennzeichnet, dass**
- die Gasvorratseinrichtung (2) eine Flüssiggas-Vorratseinrichtung ist;
- die Gasverbrauchseinrichtung (10) ein Reformer-Brennstoffzellen-System ist; und dass
- die austauschbare Leitungskomponente (8) eine Entschwefelungseinrichtung aufweist.

7. Gasführungsvorrichtung nach einem der Ansprüche 1 bis 6, **dadurch gekennzeichnet, dass** die Gasverbrauchseinrichtung (10), die erste Ventileinrichtung (5), die zweite Ventileinrichtung (9) und die austauschbare Leitungskomponente (8) eine Einheit in Form eines Gasverbrauchersystems (1) bilden.

8. Gasführungsvorrichtung nach einem der Ansprüche 1 bis 7, **dadurch gekennzeichnet, dass**
- die Gasführungsvorrichtung in einer mobilen Einheit eingebaut ist; und dass
- unterhalb von einem Montagebereich der austauschbaren Leitungskomponente (8) eine Führungseinrichtung vorgesehen ist, zum Führen von an dem Montagebereich der Leitungskomponente (8) austretendem Gas in die Umgebung auβerhalb der mobilen Einheit.

9. Verfahren zur Dichtigkeitsprüfung in einer Gasführungsvorrichtung,
wobei die Gasführungsvorrichtung aufweist:
- eine zwischen einer Gasvorratseinrichtung (2) und einer Gasverbrauchseinrichtung (10) verlaufende Gasleitungseinrichtung;
- eine in der Gasleitungeinrichtung angeordnete Leitungskomponente (8);
- eine stromauf von der Leitungskomponente (8) in der Gasleitungseinrichtung angeordnete erste Ventileinrichtung (5);
- eine stromab von der Leitungskomponente (8) in der Gasleitungseinrichtung angeordnete zweite Ventileinrichtung (9); und
- einen zwischen der ersten Ventileinrichtung (5) und der zweiten Ventileinrichtung (9) vorgesehenen Prüfbereich;
mit den Prüf-Schritten:
- im Fall einer Überdruckprüfung in einer ersten Phase Öffnen der ersten Ventileinrichtung (5) und Schließen der zweiten Ventileinrichtung (9) ;
- in einer zweiten Phase Schließen von beiden Ventileinrichtungen (5, 9) und Messen des Drucks in dem Prüfbereich über einen vorbestimmten Zeitraum;
- Auswerten des gemessenen Drucks, derart, dass eine Änderung des Drucks in dem vorbestimmten Zeitraum als Ist-Druckänderung ermittelt und mit einer vorbestimmten zulässigen Grenz-Druckänderung verglichen wird;
wobei der folgende Prüf-Schritt In der ersten Phase durchgeführt wird:**dadurch gekennzeichnet, dass**
- die in der Gasleitungeinrichtung angeordnete Leitungskomponente (8) austauschbar ist; und
- im Fall einer Unterdruckprüfung in der ersten Phase Schließen der ersten Ventileinrichtung (5) und Öffnen der zweiten Ventileinrichtung (9) vorgesehen ist;
- im Fall der Überdruckprüfung Erhöhen des Drucks in dem Prüfbereich auf einen Druck größer als der stromauf von der ersten Ventileinrichtung (5) anliegende Druck; oder
- im Fall der Unterdruckprüfung Vermindern des Drucks in dem Prüfbereich auf einen Druck niedriger als der Umgebungsdruck.

10. Verfahren nach Anspruch 9, mit dem Schritt
- Erzeugen eines Störungssignals, wenn die Ist-Druckänderung größer als die Grenz-Druckänderung ist.

11. Verfahren nach einem der Ansprüche 9 oder 10, mit den Schritten
- bei Vorliegen eines Störungssignals, Wiederholen der Prüf-Schritte;
- bei erneutem Vorliegen des Störungssignals. Erzeugen eines Alarmsignals.

12. Verfahren nach einem der Ansprüche 9 bis 11, wobei die Prüf-Schritte durchgeführt werden, wenn wenigstens eines der folgenden Kriterien erfüllt ist:
- Ablauf eines vorgegebenen Zeitintervalls;
- Ablauf einer vorgegebenen Anzahl von Betriebsstunden;
- Neustart des Gesamtsystems;
- Start der Gasverbrauchseinrichtung (10);
- Wechsel der austauschbaren Leitungskomponente (8).

## Claims

1. Gas distribution device for connecting a gas storage source (2) with a gas consuming appliance (10), comprising:
- a gas supply device extending from the gas storage source (2) to the gas consuming appliance (10);
- a conducting component (8) arranged in the gas supply device;
- a first valve element (5) arranged upstream of the conducting component (8) in the gas supply device;
- a second valve element (9) arranged downstream of the conducting component (8) in the gas supply device;
- a test area located between the first valve element (5) and the second valve element (9);
- a pressure gauge (7) arranged between the first valve element (5) and the second valve element (9) for the purpose of measuring the pressure in the test area, and with
- a control system (11) for operating the valve elements (5, 9) in such a way that
+ during an overpressure test in a first phase, the first valve element (5) is opened and the second valve element (9) is closed;
+ during a second phase, both valve elements (5, 9) are closed;
whereby:
- in the second phase, the pressure (7) can be measured over a predetermined period of time by an evaluation device;
- the measured pressure can be evaluated by an evaluation device in such a way that any change in the pressure level during this period of time is calculated as being an actual pressure change and compared with a predetermined permissible critical pressure change;
**characterised in that**:
- the conducting component (8) arranged in the gas supply device is exchangeable,
- in the event of a low pressure test in the first phase, the first valve element (5) is closed and the second valve element (9) is opened;
- a pressure change device (6) is arranged between the first valve element (5) and the second valve element (9) in order to change the gas pressure in the gas supply device; and whereby:
- the pressure change device (6) is activated in the first phase by the control system (11) and de-activated in the second phase.

2. Gas distribution device in accordance with claim 1 above, **characterised in that** an interruption signal can be generated by the evaluation device if the actual pressure change is greater than the critical pressure change.

3. Gas distribution device in accordance with claim 1 or 2 above, **characterised in that**, for the overpressure test, the pressure change device (6) located between the first valve device (5) and the exchangeable conducting component (8) is configured in such a way that, during the first phase, it can create a pressure increase between the first valve element (5) and the second valve element (9) in relation to the upstream pressure from the first valve element.

4. Gas distribution device in accordance with claim 1 or 2 above, **characterised in that** the pressure change device (6) for the under-pressure test is arranged between the exchangeable conducting component (8) and the second valve element (9) and is so configured that it can produce a reduction in the pressure level in the test area below that of the surrounding pressure during the first phase between the first valve element (5) and the second valve element (9).

5. Gas distribution device in accordance with any of the claims 1 to 4 above, **characterised in that** it comprises a detector device linked to the control system (11) in order to monitor the presence or the exchange of the exchangeable conducting component (8).

6. Gas distribution device in accordance with any of the claims 1 to 5 above, **characterised in that**:
- the gas distribution device (2) is a liquid gas storage container,
- the gas consumption appliance (10) is a reformer fuel cell system, and
- the exchangeable conducting component (8) comprises a desulphurising device.

7. Gas distribution device in accordance with any of the claims 1 to 6 above, **characterised in that** the gas consumption appliance (10), the first valve element (5), the second valve element (9) and the exchangeable conducting component (8) constitute a unit in the form of a gas consumption system (1).

8. Gas distribution device in accordance with any of the claims I to 7 above, **characterised in that**:
- the gas distribution device is mounted in a mobile unit, and that
- a distribution device is arranged below an assembly area of the exchangeable conducting component (8) in order to distribute gas exiting from the assembly area of the conducting component (8) into the environment below the mobile unit.

9. Process for tightness testing in a gas distribution device, whereby the gas distribution device comprises:
- a gas supply device running between a gas storage device (2) and a gas consumption appliance (10);
- a conducting component (8) arranged in the gas supply device;
- a first valve element (5) arranged upstream of the conducting component (8) in the gas supply device ;
- a second valve element (9) arranged downstream of the conducting component (8) in the gas supply device, and
- a test area arranged between the first valve element (5) and the second valve element (9), having the following test stages:
- in the event of an overpressure test in a first phase, opening the first valve element (5) and closing the second valve element (9);
- in a second phase, closing the two valve elements (5, 9) and measuring the pressure in the test area over a predetermined period of time;
- evaluating the measured pressure in such a way that any change of the pressure during the predetermined period is calculated as an actual pressure change and is compared with predetermined admissible critical pressure change, **characterised in that**:
- the conducting component (8) arranged in the gas supply device is exchangeable, and
- in the event of an under-pressure test in the first phase, the first valve element (5) is closed and the second valve element (9) is opened;
whereby the following test step is carried out in the first phase:
- in the event of the overpressure test, the pressure in the test area is increased to a pressure level that is higher than the pressure level upstream from the first valve element (5), or
- in the event of the under-pressure test, the pressure is reduced in the test area to a pressure level that is lower than that of the environment.

10. Process in accordance with claim 9 above, comprising the step:
- Generating an interruption signal if the actual pressure change is greater than the critical pressure change.

11. Process in accordance with claim 9 or 10 above, comprising the steps:
- Repetition of the test steps if an interruption signal occurs;
- Generation of an alarm signal if an interruption signal re-occurs.

12. Process in accordance with any of the claims 9 to 11 above, whereby the test steps are carried out if at least one of the following criteria is satisfied:
- Expiry of a predetermined time interval,
- Expiry of a predetermined number of operating hours,
- A restart of the entire system,
- Start of the gas consumption appliance (10),
- Exchange of the exchangeable conducting component (8).

## Revendications

1. Dispositif de canalisation de gaz pour relier un dispositif de stockage de gaz (2) à un dispositif de consommation de gaz (10), avec
- un dispositif formant conduite de gaz qui s'étend entre le dispositif de stockage de gaz (2) et le dispositif de consommation de gaz (10) ;
- un composant de conduite (8) qui est disposé dans le dispositif formant conduite de gaz ;
- un premier dispositif à soupape (5) qui est disposé en amont du composant de conduite (8) dans le dispositif formant conduite de gaz ;
- un second dispositif à soupape (9) qui est disposé en aval du composant de conduite (8) dans le dispositif formant conduite de gaz ;
- une zone de contrôle qui est prévue entre le premier dispositif à soupape (5) et le second dispositif à soupape (9) ;
- un manomètre (7) qui est disposé entre le premier dispositif à soupape (5) et le second dispositif à soupape (9), pour mesurer une pression dans la zone de contrôle ; et
- une commande (11) pour commander les dispositifs à soupape (5, 9) de telle sorte que
+ dans le cas d'un contrôle de surpression, lors d'une première phase le premier dispositif à soupape (5) soit ouvert et le second dispositif à soupape (9) soit fermé ;
+ lors d'une seconde phase les deux dispositifs à soupape (5, 9) soient fermés ;
étant précisé que
- lors de la seconde phase, la pression peut être mesurée par le manomètre (7) sur une durée prédéfinie ;
- la pression mesurée est apte à être analysée par un dispositif d'analyse, de telle sorte qu'une variation de la pression lors de la durée prédéfinie est déterminée comme variation de pression réelle et est comparée à une variation de pression limite autorisée prédéfinie ;
**caractérisé en ce que**
- le composant de conduite (8) disposé dans le dispositif formant conduite de gaz est remplaçable,
- dans le cas d'un contrôle de dépression, lors de la première phase le premier dispositif à soupape (5) est fermé et le second dispositif de soupape (9) est ouvert ;
- il est prévu entre le premier dispositif à soupape (5) et le second dispositif à soupape (9) un dispositif de variation de pression (6) pour modifier la pression gazeuse dans le dispositif formant conduite de gaz ; et étant précisé que
- le dispositif de variation de pression (6) est activé par la commande (11) lors de la première phase, et désactivé lors de la seconde phase.

2. Dispositif de canalisation de gaz selon la revendication 1, **caractérisé en ce qu'**un signal d'incident est apte à être généré par le dispositif d'analyse si la variation de pression réelle est supérieure à la variation de pression limite.

3. Dispositif de canalisation de gaz selon l'une des revendications 1 ou 2, **caractérisé en ce que** pour le contrôle de surpression, le dispositif de variation de pression (6) est disposé entre le premier dispositif à soupape (5) et le composant de conduite remplaçable (8) et est conçu pour provoquer lors de la première phase, entre le premier dispositif à soupape (5) et le second dispositif à soupape (9), une augmentation de la pression dans la zone de contrôle par rapport à la pression appliquée en amont du premier dispositif à soupape (5).

4. Dispositif de canalisation de gaz selon l'une des revendications 1 ou 2, **caractérisé en ce que** pour le contrôle de dépression, le dispositif de variation de pression (6) est disposé entre le composant de conduite remplaçable (8) et le second dispositif à soupape (9) et est conçu pour provoquer lors de la première phase, entre le premier dispositif à soupape (5) et le second dispositif à soupape (9), une réduction de la pression appliquée dans la zone de contrôle, jusqu'à une pression inférieure à la pression ambiante.

5. Dispositif de canalisation de gaz selon l'une des revendications 1 à 4, **caractérisé en ce qu'**il est prévu un détecteur couplé à la commande (11), pour surveiller la présence ou le remplacement du composant de conduite remplaçable (8).

6. Dispositif de canalisation de gaz selon l'une des revendications 1 à 5, **caractérisé en ce que**
- le dispositif de stockage de gaz (2) est constitué par un dispositif de stockage de gaz liquide ;
- le dispositif de consommation de gaz (10) est constitué par un système de piles à combustible à reformeur ; et **en ce que**
- le composant de conduite remplaçable (8) comporte un dispositif de désulfuration.

7. Dispositif de canalisation de gaz selon l'une des revendications 1 à 6, **caractérisé en ce que** le dispositif de consommation de gaz (10), le premier dispositif à soupape (5), le second dispositif à soupape (9) et le composant de conduite remplaçable (8) forment une unité sous la forme d'un système de consommation de gaz (1).

8. Dispositif de canalisation de gaz selon l'une des revendications 1 à 7, **caractérisé en ce que**
- le dispositif de canalisation de gaz est monté dans une unité mobile ; et
- **en ce qu'**il est prévu au-dessous d'une zone de montage du composant de conduite remplaçable (8) un dispositif de canalisation pour amener le gaz qui sort au niveau de la zone de montage du composant de conduite (8) dans l'environnement situé à l'extérieur de l'unité mobile.

9. Procédé pour contrôler l'étanchéité dans un dispositif de canalisation de gaz, étant précisé que le dispositif de canalisation de gaz comporte :
- un dispositif formant conduite de gaz qui s'étend entre le dispositif de stockage de gaz (2) et le dispositif de consommation de gaz (10) ;
- un composant de conduite (8) qui est disposé dans le dispositif formant conduite de gaz ;
- un premier dispositif à soupape (5) qui est disposé en amont du composant de conduite (8) dans le dispositif formant conduite de gaz ;
- un second dispositif à soupape (9) qui est disposé en aval du composant de conduite (8) dans le dispositif formant conduite de gaz ; et
- une zone de contrôle qui est prévue entre le premier dispositif à soupape (5) et le second dispositif à soupape (9) ;
avec les étapes de contrôle suivantes :
- dans le cas d'un contrôle de surpression, lors d'une première phase ouverture du premier dispositif à soupape (5) et fermeture du second dispositif à soupape (9) ;
- lors d'une seconde phase fermeture des deux dispositifs à soupape (5, 9) et mesure de la pression dans la zone de contrôle sur une durée prédéfinie ;
- analyse de la pression mesurée, de telle sorte qu'une variation de la pression pendant la durée prédéfinie soit déterminée comme une variation de pression réelle et soit comparée à une variation de pression limite autorisée prédéfinie ;
**caractérisé en ce que**
- le composant de conduite (8) disposé dans le dispositif formant conduite de gaz est remplaçable ; et
- il est prévu dans le cas d'un contrôle de dépression, lors de la première phase une fermeture du premier dispositif à soupape (5) et une ouverture du second dispositif à soupape (9) ;
étant précisé que l'étape de contrôle suivante est exécutée lors de la première phase :
- dans le cas du contrôle de surpression, augmentation de la pression dans la zone de contrôle, jusqu'à une pression supérieure à la pression appliquée en amont du premier dispositif à soupape (5) ; ou
- dans le cas du contrôle de dépression, réduction de la pression dans la zone de contrôle, jusqu'à une pression inférieure à la pression ambiante.

10. Procédé selon la revendication 9, avec l'étape qui consiste à
- générer un signal d'incident si la variation de pression réelle est supérieure à la variation de pression limite.

11. Procédé selon l'une des revendications 9 à 10, avec les étapes qui consistent
- en présence d'un signal d'incident, à répéter les étapes de contrôle ;
- dans le cas d'une présence renouvelée du signal d'incident, à générer un signal d'alarme.

12. Procédé selon l'une des revendications 9 à 11, étant précisé que les étapes de contrôle sont exécutées si l'un au moins des critères suivants est satisfait :
- écoulement d'un laps de temps prédéfini ;
- écoulement d'un nombre prédéfini d'heures de fonctionnement ;
- redémarrage du système global ;
- démarrage du dispositif de consommation de gaz (10) ;
- changement du composant de conduite remplaçable (8).
